Europäisches Patentamt

European Patent Office

Office européen des brevets

(11) Veröffentlichungsnummer: **0 386 648**
A1

## (12) EUROPÄISCHE PATENTANMELDUNG

(21) Anmeldenummer: 90104066.7

(22) Anmeldetag: 02.03.90

(51) Int. Cl.5: **C03C 11/00, C03B 19/10**

(30) Priorität: 07.03.89 DE 3907194

(43) Veröffentlichungstag der Anmeldung:
**12.09.90 Patentblatt 90/37**

(84) Benannte Vertragsstaaten:
**AT BE CH DK ES FR GB IT LI LU NL SE**

(71) Anmelder: **Veit Dennert KG Baustoffbetriebe**

**D-8602 Schlüsselfeld(DE)**

(72) Erfinder: **Dennert, Hans Veit**
**Schloss Breitenlohe**
**D-8602 Burghaslach(DE)**

(74) Vertreter: **Tergau, Enno, Dipl.-Ing. et al**
**Tergau & Pohl Patentanwälte Hefnersplatz 3**
**Postfach 119347**
**D-8500 Nürnberg 11(DE)**

(54) Verfahren zum Herstellen von offenporigen Schaumglas-Formkörpern.

(57) Es wird ein Verfahren zum Herstellen von vorwiegend offenporigen Schaumglas-Formkörpern, insbesondere von Schaumglasgranulat beschrieben, bei welchem von Schaumglas-Formkörpern mit vorwiegend geschlossenen Poren ausgegangen wird und diese einer Unterdruck-und/oder Überdruckbehandlung unterworfen werden. Als Medium für die Überdruckbehandlung kann Wasser, eine wäßrige Lösung oder ein Gas, etwa Luft, verwendet werden. Eine vorteilhafte Kombination besteht darin, daß das Ausgangsmaterial zunächst einer Unterdruckbehandlung und anschließend einer Überdruckbehandlung unterworfen wird.

FIG.1

EP 0 386 648 A1

## Verfahren zum Herstellen von offenporigen Schaumglas-Formkörpern

Es ist bereits seit längerem bekannt, Gläser unterschiedlicher Zusammensetzung zu schaumigen Formkörpern zu verarbeiten. Unter dem Begriff "Formkörper" werden dabei Granulate unterschiedlicher Korngröße, aber auch Platten, Quader, Brocken o.dgl. Körper verstanden. Für die Herstellung derartiger Formkörper aus Schaumglas sind verschiedene Wege vorgeschlagen worden, wie dies beispielsweise aus den deutschen Patentschriften 745 773, 19 44 523, 30 44 130 oder auch der europäischen Patentschrift 0 170 978 hervorgeht.

Ziel der vorbekannten Herstellungsverfahren war es, Schaumglas-Formkörper aus möglichst billigen Ausgangsstoffen, vorzugsweise Altglas, herzustellen und dabei die Verfahren möglichst wirtschaftlich, insbesondere energiesparend, durchzuführen. Ein weiteres Ziel war es, Formkörper mit möglichst gleichmäßiger Porengröße zu erhalten.

Die vorbekannten Schaumglasprodukte, insbesondere Schaumglas-Granulate, sind spezifisch leicht; ihre Dichten liegen typischerweise im Bereich von 0,05 bis 0,4 g/cm$^3$. Die das Glas durchsetzenden Poren sind im allgemeinen geschlossen und mit Gas oder Luft gefüllt. Die Produkte haben dementsprechend ein hohes Wärme- und Schall-Isolationsvermögen und sie werden unter Ausnützung dieser Eigenschaft hauptsächlich in der Bauindustrie angewandt.

Andererseits ist es auch bekannt, offenporige Schaumglassorten herzustellen, die dann zum Immobilisieren von Mikro- Organismen dienen, wie sie beispielsweise in biochemischen Prozessen, vorzugsweise der Abwasserreinigung eingesetzt werden. Der Vorschlag, offenporige Schaumglassorten zum Immobilisieren von Mikro-Organismen einzusetzen, geht beispielsweise aus der US-PS 3 929 630 hervor. In dieser Schrift ist auch ein Verfahren zum Herstellen dieser Körper beschrieben, welches darin besteht, daß Wasserglas oder ähnliche Substanzen mit schaumbildenden Mitteln, wie Saponinen o.dgl. vermischt, sodann geliert und in geeigneter Weise aufgeschäumt werden. Das Material wird sodann unter Anwendung schwacher Säuren, beispielsweise $CO_2$ ausgehärtet. Die auf diese Weise erzeugten Schaumglassorten sind jedoch mechanisch empfindlich und teuer.

Ein weiteres Verfahren zum Herstellen von offenporigem Schaumglas ist in der deutschen Auslegeschrift 16 96 022 beschrieben. Das Verfahren besteht darin, daß aus einer Schmelze sehr harten Glases zunächst ein Glasband geformt und dieses unmittelbar nach seiner Verfestigung abgeschreckt wird. Die dabei entstehenden etwa linsengroßen Glasteilchen werden fein zermahlen, mit einem gasabgebenden Treibmittel vermischt und im Ofen gesintert. Das Produkt wird dann durch Erwärmen auf Schmelztemperatur aufgebläht und danach langsam zum Erkalten gebracht. Das Verfahren wird derart durchgeführt, daß beim Erkalten ein Teil der Trennwände zwischen den vom Treibmittel gebildeten Hohlräumen bricht und eine Verbindung der Hohlräume untereinander entsteht. Zum Schluß muß die an der Formwandung entstehende Kruste abgeschnitten werden. Das so erzeugte Produkt soll nach dem Tränken der offenen Poren mit Wasser als äußerst feinkörniges Schleifmaterial Verwendung finden und insbesondere zum Schleifen von Beton bei der Herstellung von Sichtbeton dienen.

Der Erfindung liegt die Aufgabe zugrunde, ein leicht durchzuführendes wirtschaftliches Verfahren zum Herstellen von Schaumglas-Formkörpern, insbesondere Schaumglas-Granulat, mit im wesentlichen offenen Poren vorzuschlagen. Der artige Schaumglas-Formkörper können nach Belieben mit Flüssigkeiten, beispielsweise Salzlösungen, getränkt und anschließend getrocknet werden. Es entstehen auf diese Weise Depot-Substanzen, die mannigfache technische Verwendung finden.

Die Lösung der genannten Aufgabe besteht darin, daß von Schaumglas-Formkörpern, insbesondere Schaumglas-Granulat mit geschlossenen Poren ausgegangen wird und daß diese einer Unter- und/oder Überdruck-Behandlung unterworfen werden. Als Medium für die Überdruckbehandlung kann Wasser oder eine wässrige Lösung, also beispielsweise eine Salzlösung, eine Nährlösung für Mikro-Organismen o.dgl. dienen. Auch kann als Medium für die Überdruck-Behandlung ein Gas, vorzugsweise Luft, eingesetzt werden.

Als Ausgangsmaterial für die Durchführung dieses Verfahrens kann beispielsweise ein solches verwendet werden, wie es nach der DE-PS 30 44 130 oder auch der europäischen Patentschrift 0 170 978 erhalten wird. Die Überdruckbehandlung wird vorzugsweise in einem geschlossenen Topf von beispielsweise 5-10 m$^3$ Fassungsvermögen durchgeführt und es werden Drücke von 1-50 bar während einer Zeit von 0,5 Minuten bis einigen Stunden angewandt. Durch die Druckbehandlung werden die zarten Lamellen, welche die geschlossenen Poren des Ausgangsmaterials begrenzen, deformiert und gebrochen. Das Druckmedium dringt dann durch die entstandenen Haarrisse in die Poren ein und belastet die nächste Lamellenschicht, die dann ebenfalls deformiert wird und schließlich bricht. Auf diese Weise dringt das Druckmedium langsam in das Ausgangsmaterial ein und öffnet auf diese Weise in zeitlicher Aufeinanderfolge einen mehr oder

2

weniger großen Anteil der vorhandenen Poren. Infolge dieses Mechanismus' ist es möglich, durch zeitlich abgestufte Behandlung und durch Wahl des Druckes ein genau einstellbares Maß an geöffneten Poren im Ausgangsmaterial zu erzeugen. Mitunter kann es vorteilhaft sein, das zu behan delnde Ausgangsmaterial oberflächlich aufzurauhen, um eine dort evtl. vorhandende Sinterhaut zu entfernen.

Es wurde beobachtet, daß ein vergleichbarer Effekt auch erzielt werden kann, wenn das Ausgangsmaterial, also Schaumglas-Formkörper mit geschlossenen Poren einer Unterdruckbehandlung unterworfen wird. Besonders wirtschaftlich läßt sich der gewünschte Erfolg erzielen, wenn eine Unter-und Überdruckbehandlung miteinander kombiniert werden.

Das am Schluß einer Druckbehandlung vorliegende Material mit im wesentlichen offenen Poren ist mit Wasser oder der Behandlungslösung gefüllt. Es kann leicht getrocknet werden, wobei dann ein rieselfähiges gut lagerbares Produkt entsteht. Wird die Behandlung mit einem Druckgas oder ausschließlich mit Unterdruck durchgeführt, so entfällt naturgemäß der zusätzliche Vorgang des Trocknens.

In der europäischen Patentanmeldung 0 068 287 sind Depotwerkstoffe beschrieben, die auf der Basis von geblähtem Perlit oder ähnlichen Werkstoffen, auch Schaumglas, hergestellt sind und deren offene Poren mit Wirkstoffen oder Salzen gefüllt sind. Bei der Herstellung dieser Depotwerkstoffe wird aber von offenporigen Schaumstoffen ausgegangen, die unter Überdruck mit den gewünschten Stoffen imprägniert werden. Da die Ausgangswerkstoffe bereits durchwegs offene Poren enthalten, kann der Zweck der Überdruckbehandlung nicht sein, die Porenwände zu durchbrechen. Ziel ist dort vielmehr lediglich die wirkungsvolle Imprägnierung der bereits offenporigen Schaumstoffe mit einer Wirkstofflösung.

Je nach Anwendungszweck des erzeugten Produktes wird die Überdruckbehandlung mit einem Gas, beispielsweise Luft, mit reinem Wasser, (Leitungswasser) oder auch mit Salzlösungen oder Lösungen organischer Stoffe durchgeführt. Soll das erzeugte Produkt zum Immobilisieren von Mikro-Organismen dienen, so kann es erwünscht sein, die Poren nicht nur zu öffnen, sondern sie auch mit geeigneten Nährmedien zu füllen. Die Nährmedien können dabei nach Abschluß der Behandlung in flüssiger Form in den Poren enthalten sein oder sie können auch ein Verfestigungsmittel, beispielsweise Agar-Agar, Polyvinylalkohol oder ähnliches enthalten. Eine typische Nährlösung zur Ausführung dieses Verfahrens kann etw 0,5% NaCl, 0,2% NaH$_2$PO$_4$, 2-5% Dextrose sowie 5% Verfestigungsmittel, beispielsweise Polyvinylalkohol, enthalten. Unter Anwendung einer derartigen gelierenden Nährlösung muß die Druckbehandlung bei erhöhter Temperatur, beispielsweise bei 40°C durchgeführt werden, einer Temperatur, bei der die Lösung völlig flüssig ist. Nach Beendigung der Behandlung kühlt das Material ab und die in die Poren eingedrungenen Quantitäten erstarren. Es entsteht auf diese Weise ein hochwertiges Schaumglas-Produkt mit gefüllten offenen Poren.

Insbesondere bei der Verwendung des erzeugten Produktes bei mikro-biologischen Verfahren, beispielsweise bei der Abwasserbehandlung, ist es wesentlich, daß das Produkt nach dem Bewachsen mit Mikro-Organismen weder zu leicht noch zu schwer ist. Ein zu leichtes Produkt würde an die Oberfläche schwimmen und sich dort absetzen. Ein zu schweres Produkt würde zu Boden sinken und somit ebenfalls das zu behandelnde Medium, beispielsweise Abwasser, nicht gleichmäßig durchsetzen. Ideal wäre ein Produkt, dessen Dichte etwa der des zu behandelnden Mediums, also des Abwassers, entspricht und welches folglich in diesem schwebt. Das vorgeschlagene Verfahren gestattet es, von einem Schaumglas mit geschlossenen Poren auszugehen und durch die gezielte Anwendung der vorgeschlagenen Behandlung gerade so viel Poren zu öffnen, daß ein Produkt gewünschter Dichte entsteht. Bei der Durchführung des Verfahrens ist es möglich, das Gesamtvolumen der bereits geöffneten Poren zu ermitteln, da dieses Volumen der Menge Druckmedium entspricht, welche vom Schaumglas bereits aufgenommen worden ist.

Zur Durchführung der Druckwasserbehandlung können Behälter mit einem Fassungsvermögen von 5-10 m$^3$ eingesetzt werden. Es ist auch möglich, die aus der Gasbetonherstellung bekannten Großautoklaven anzuwenden. In jedem Fall werden die Behälter mit dem zu behandelnden Granulat gefüllt und das verbleibende Volumen wird mit Druckmedium, beispielsweise Druckwasser oder einer anderen Druckflüssigkeit (Salzlösung usw.) aufgefüllt. Die Behandlung kann dann so fortgeführt werden, daß der Behälter unter einem Innendruck von beispielsweise 30 bar gesetzt wird. Im Laufe von beispielsweise einer halben bis einer Stunde sinkt der Druck auf etwa 5 bar ab, worauf die Behandlung abgeschlossen werden kann.

Bei einer anderen Verfahrensweise wird zuvor ermittelt, welches Flüssigkeitsvolumen die zu behandelnde Masse aufnehmen soll. Die Behandlung wird dann bei konstantem Druck, beispielsweise konstanten 30 bar, durchgeführt und sie wird abgebrochen, wenn das Volumen der zum Aufrechterhalten des Druckes erforderlichen Flüssigkeit den berechneten Wert, beispielsweise 60 1, erreicht hat.

Die Erfindung wird im folgenden anhand einiger Ausführungsbeispiele und unter Bezugnahme auf die Zeichnung näher erläutert. Es stellen dar:

Fig 1 eine rasterelekronenmikroskopische Aufnahme eines angeschnittenen Schaumglas-Granulatkornes mit geschlossenen Poren.

Fig. 2 REM-Aufnahme der Schnittfläche eines druckbehandelten Schaumglaskornes bei 500facher Vergrößerung;

Fig. 3 Wiedergabe eines Ausschnittes aus Fig. 2 bei 2000facher Vergrößerung;

Fig. 4 Bruchkante aus der Oberfläche des Teiles gemäß Fig. 3 bei 1000facher Vergrößerung.

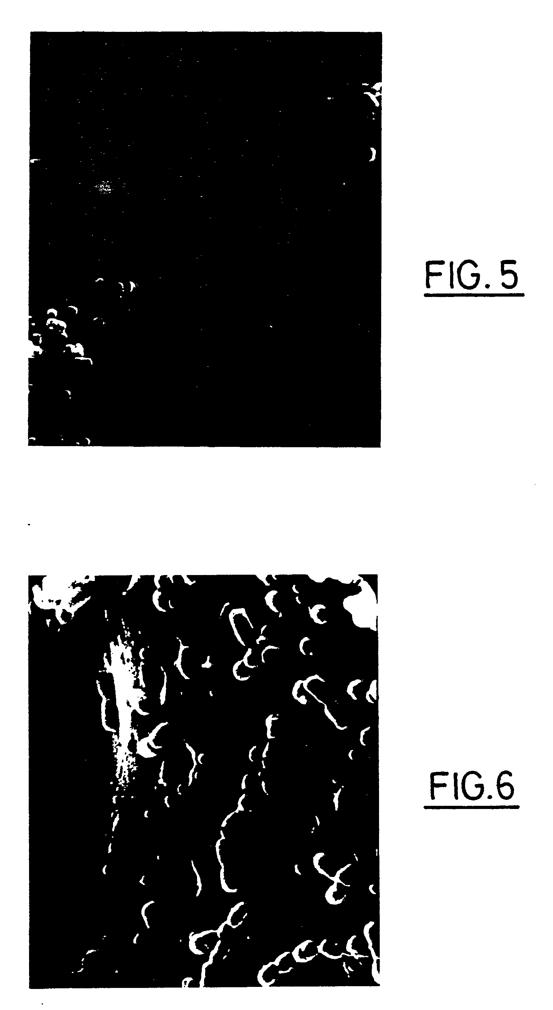

Fig. 5 und 6 bewachsende Oberflächen von druckbehandelten Schaumglasperlen mit dem zum Denitrifizieren benutzten Mikro-Organismus Throsphaera pantotropha;

Fig. 7 eine graphische Darstellung.

Das Ausgangsmaterial für alle nachstehenden Beispiele wurde nach der DE-PS 30 44 130 hergestellt. Es wurde dabei wie folgt verfahren:

760 kg Flaschenabfallglas und 180 kg eines Glases aus 68% $SiO_2$, 27% $Na_2O$ und 5% sonstige Metalloxyde wurden in einer Mühle auf eine Körnung unter 0,1 mm gemahlen. Diese Glasmehlmenge wurde in einem Rührbehälter zusammen mit 30 kg $Na_2SO_4$, 30 kg Zucker und 20 kg Pyrolusit (70% $MnO_2$) sowie 600 kg Wasser bei 90°C 40 Minuten lang gerührt. In die eingedickte Mischung wurden 500 kg Unter- und feingemahlenes Überkorn aus früheren Ansätzen eingebracht und bei erhöhter Drehzahl gerührt. Dadurch wurde die Gesamtmischung größtenteils auf Korngrößen von 0,5 bis 2,0 mm granuliert.

Nach Entleeren des Rührkessels wurde das Material in einer Trockentrommel, die auf 300°C geheizt war, getrocknet. Das aus der Trommel auslaufende Granulat wurde in einer Siebmaschine in Unter-, Über- und Brauchkorn getrennt. Das Korn mit Untergröße sowie das in einem Brecher zerkleinerte Korn mit Übergröße wurde in ein Vorratssilo zurückgeführt. Das Brauchkorn wurde mit 20 Gew% Tonmehl gemischt und in einem Verschäumungsrohr bei 780°C auf das fünffache Volumen gebläht. Nach Abtrennung des überschüssigen Trennmittels lag ein Granulat vor, von welchem ein Kubikmeter 125 kg wog. Die Korngröße betrug 2-4 mm. Das Produkt hatte im wesentlichen geschlossene Poren.

Ein Teil des so erzeugten Materials wurde zunächst einer Druckwasserbehandlung mit unterschiedlichen Drücken und von unterschiedlicher Dauer unterworfen. Nach jedem Versuch wurde die Wasseraufnahme des Materials durch Auswiegen bestimmt. Außerdem wurde der Sinkanteil in reinem Wasser bestimmt, also derjenige Anteil, der nach dem Einrühren in Wasser und Stehenlassen bis zum Erreichen des Gleichgewichtes sich am Boden des Prüfgefäßes angesammelt hat. Die Ergebnisse sind aus Tabelle 1 ersichtlich.

In einer weiteren Versuchsreihe wurde ein Teil des wie vorstehend beschrieben erzeugten Materials einer Unterdruckbehandlung unterworfen. Die Versuchsbedingungen sowie die Ergebnisse sind aus Tabelle 2 ersichtlich.

Schließlich wurde ein weiterer Teil des Versuchsmaterials einer Doppelbehandlung aus vorausgehender Unterdruckbehandlung und nachfolgender Überdruckbehandlung unterworfen. Die dabei erzielten Ergebnisse sind in Tabelle 3 zusammengefaßt.

Ein weiterer Teil des Versuchsmaterials wurde zunächst einer Druckbehandlung mit Druckluft und anschließend einer Unterdruckbehandlung unterworfen. Im Anschluß an die Druckluftbehandlung wurde jeweils Vakuum erzeugt und dieses Vakuum durch einfließendes Wasser abgebaut. Durch diese Vorgehensweise war es möglich, die Wasseraufnahme relativ schnell festzustellen. Die Ergebnisse sind in Tabelle 4 wiedergegeben.

Um die Auswirkungen der vorgeschlagenen Unterdruck- und Überdruckbehandlung zu demonstrieren, wurden entsprechend behandelte Proben unter dem Rasterelektronenmikroskop untersucht. Fig. I zeigt ein Granulatkorn (1) im aufgeschnittenen Zustand. Die Kante der Schnittfläche verläuft bei (2), so daß die wenig rauhe Oberfläche des Granulatkornes bei (3) zu erkennen ist. Jenseits der Schnittkante (2) sind die Poren (4) zu sehen, welche durch geschlossene Lamellen (5) voneinander getrennt sind.

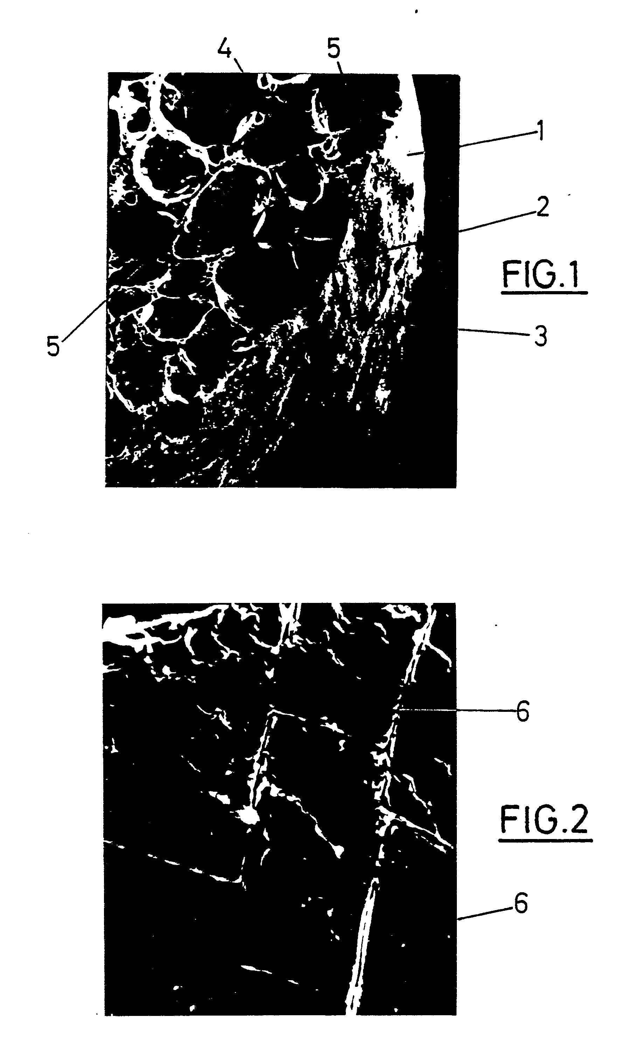

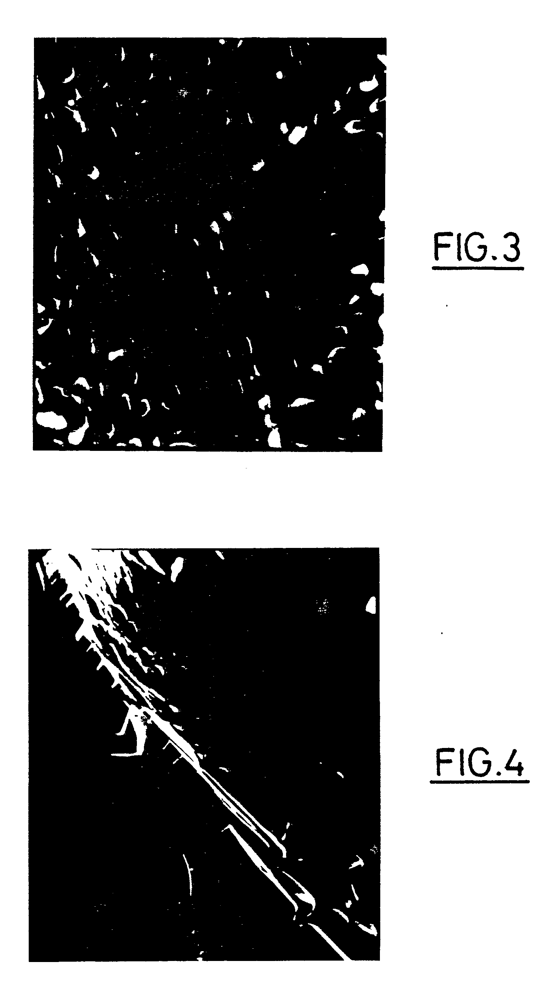

In Fig. 2 ist ein vergrößerter Ausschnitt aus einer Lamellenwand wiedergegeben. Es ist erkennbar, daß die Wand durch regelmäßig verlaufende Haarrisse (6) durchbrochen ist. Eine stärkere Vergrößerung aus dem gleichen Lamellenbereich wie Fig. 2 ist in Fig. 3 zu erkennen.

Fig. 4 zeigt eine Lamellenbruchkante aus der gleichen Probe.

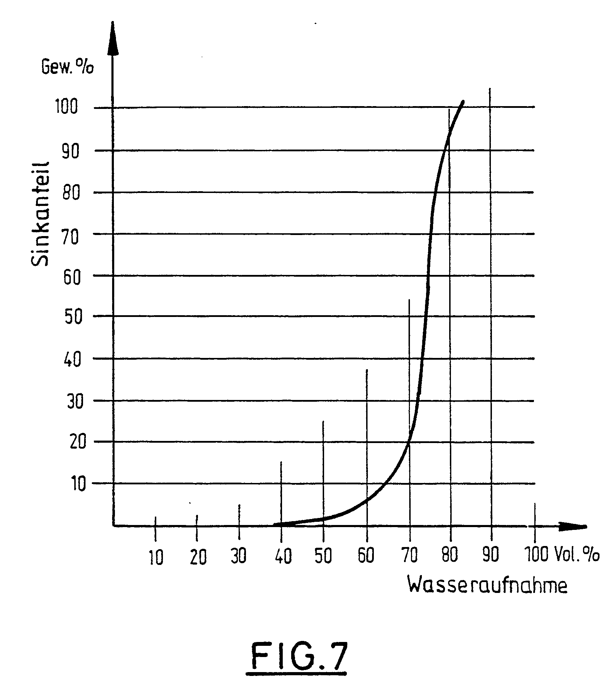

Das beschriebene Verfahren gestattet es, durch gezielte Anwendung der Über- und/oder Unterdruckbehandlung das Gesamtvolumen der geöffneten Poren einzustellen. Es ist dies für zahlreiche Anwendungen des hergestellten Produktes wichtig, da auf diese Weise der Sinkanteil und somit das Schwebeverhalten in einem gegebenen Medium eingestellt werden kann. Fig. 7 zeigt die Abhängigkeit des Sinkanteiles von der Wasseraufnahme in Volumenprozent. Es ist erkennbar, daß bei etwa 70 Vol% Wasseraufnahme eine sprunghafte Erhöhung des Sinkanteiles eintritt. Soll demnach ein Produkt erzeugt werden, welches im wesentlichen bei der späteren Anwendung in Schwebe bleibt, so ist es erforderlich, das Produkt bis zu einer Gesamtwasseraufnahme von 60-70 Vol% zu behandeln. In diesem Zusammenhang muß allerdings beachtet werden, daß die in Fig. 7 dargestellte Kurve exakt lediglich für Schaumglasgranulate der hier untersuchten Zusammensetzung gilt. Für anders zusammengesetzte Granulate kann aber die Kurve leicht in entsprechender Weise aufgenommen werden.

In Anwendung dieser Erkenntnis wird vorgeschlagen, daß ein Einsatzstoff ein Schaumglas-Granulat mit einer Rohdichte von 0,05 bis 0,4 g,/cm$^3$ verwendet wird und die Druckbehandlung bis zu einem Volumen der offenen Poren von ca. 60-80 Vol% fortgesetzt wird. Das erzeugte Produkt eignet sich besonders für die mikrobiologische Abwasserbehandlung nach dem Schwebeverfahen.

| Nr. | Korn | | Druckwasser | | Wasseraufnahme | | Sinkanteil |
|-----|------|-----|-------------|-----|----------------|--------|------------|
| | mm | g/l | Std. | bar | Gew. % | Vol. % | Gew. % |
| 1 | 2 - 4 | 177 | 0,25 | 2 | 118,4 | 37 | 0,1 |
| 2 | 2 - 4 | 177 | 0,25 | 3,5 | 126,9 | 39 | 0,1 |
| 3 | 2 - 4 | 177 | 0,25 | 6 | 128,0 | 40 | 0,2 |
| 4 | 2 - 4 | 177 | 0,25 | 10 | 142,3 | 44 | 0,3 |
| 5 | 2 - 4 | 177 | 0,25 | 20 | 188,0 | 59 | 4 |
| 6 | 2 - 4 | 177 | 0,25 | 30 | 217,3 | 68 | 6 |
| 7 | 2 - 4 | 177 | 0,25 | 35 | 221,7 | 69 | 13 |
| 10 | 2 - 4 | 178 | 1 | 5 | 146 | 46 | 0,22 |
| 11 | 2 - 4 | 178 | 1 | 10 | 154 | 48 | 0,43 |
| 12 | 2 - 4 | 178 | 1 | 20 | 210 | 66 | 4,2 |
| 13 | 2 - 4 | 178 | 1 | 30 | 233 | 73 | 47,9 |
| 14 | 2 - 4 | 178 | 1 | 35 | 240 | 75 | 58,3 |
| 15 | 2 - 4 | 178 | 1 | 10 | ,161 | 50 | 0,6 |
| 16 | 2 - 4 | 178 | 2 | 10 | 173 | 54 | 0,94 |
| 17 | 2 - 4 | 178 | 3 | 10 | 189 | 59 | 1,5 |
| 18 | 2 - 4 | 178 | 1 | 35 | 237 | 74 | 37,3 |

EP 0 386 648 A1

| Nr. | Korn | | Druckwasser | | Wasseraufnahme | | Sinkanteil | | |
|-----|------|------|------|------|------|------|------|---|---|
| | mm | g/l | Std. | bar | Gew. % | Vol. % | Gew. % | | |
| 19 | 2 - 4 | 178 | 2 | 35 | 240 | 75 | 62,6 | | |
| 20 | 2 - 4 | 178 | 3 | 35 | 255 | 80 | 74,3 | | |

| Nr. | Korn | | Unterdruck | | Wasseraufnahme | | Sinkanteil |
|---|---|---|---|---|---|---|---|
| | mm | g/l | min. | mbar | Gew. % | Vol. % | Gew. % |
| 30 | 2 - 4 | 176 | 1 | 800 | 114 | 36 | |
| 31 | 2 - 4 | 176 | 1 | 700 | 116 | 36 | |
| 32 | 2 - 4 | 176 | 1 | 600 | 118 | 37 | |
| 33 | 2 - 4 | 176 | 1 | 500 | 122 | 38 | 0,1 |
| 34 | 2 - 4 | 176 | 1 | 400 | 125 | 39 | 0,2 |
| 35 | 2 - 4 | 176 | 1 | 300 | 142 | 44 | 0,23 |
| 36 | 2 - 4 | 176 | 1 | 200 | 159 | 50 | 0,2 |
| 37 | 2 - 4 | 176 | 1 | 65 | 166 | 52 | 0,5 |
| 38 | 2 - 4 | 176 | 5 | 65 | 168 | 53 | 0,6 |
| 39 | 2 - 4 | 176 | 15 | 65 | 167 | 52 | 0,4 |
| 40 | 2 - 4 | 176 | 30 | 65 | 167 | 52 | 0,6 |
| 41 | 2 - 4 | 176 | 60 | 65 | 167 | 52 | 0,7 |

Tabelle 3

| Nr. | Korn | | Unterdruck | | Druckwasser | | Wasseraufname | | Sinkanteil |
|-----|------|-----|------|------|------|-----|--------|--------|-----------|
| | mm | g/l | min. | mbar | min. | bar | Gew. % | Vol. % | Gew. % |
| 50 | 2 - 4 | 177 | 1 | 65 | 5 | 2 | 164 | 51 | 0,8 |
| 51 | 2 - 4 | 177 | 1 | 65 | 5 | 3,5 | 174 | 54 | 0,9 |
| 52 | 2 - 4 | 177 | 1 | 65 | 5 | 6 | 177 | 55 | 1,0 |
| 53 | 2 - 4 | 177 | 1 | 65 | 5 | 10 | 180 | 56 | 1,5 |
| 54 | 2 - 4 | 177 | 1 | 65 | 5 | 20 | 217 | 68 | 19 |
| 55 | 2 - 4 | 177 | 1 | 65 | 5 | 30 | 241 | 75 | 68 |
| 56 | 2 - 4 | 177 | 1 | 65 | 5 | 35 | 245 | 78 | 89 |
| 57 | 2 - 4 | 177 | 1 | 65 | 10 | 35 | 253 | 79 | 92 |
| 58 | 2 - 4 | 177 | 1 | 65 | 15 | 35 | 254 | 80 | 95 |

| Nr. | Korn | | Druckluft | | Unterdruck | | Wasseraufname | | Sinkanteil |
|---|---|---|---|---|---|---|---|---|---|
| | mm | g/l | min. | mbar | min. | mbar | Gew. % | Vol. % | Gew. % |
| 60 | 2 - 4 | 175 | 15 | 2 | 1 | 750 | 119 | 37 | - |
| 61 | 2 - 4 | 175 | 15 | 2 | 1 | 500 | 124 | 39 | 0,1 |
| 62 | 2 - 4 | 175 | 15 | 2 | 1 | 65 | 168 | 52 | 0,1 |
| 63 | 2 - 4 | 175 | 15 | 2,5 | 1 | 65 | 167 | 52 | 0,1 |
| 64 | 2 - 4 | 175 | 15 | 5 | 1 | 65 | 168 | 53 | 0,1 |
| 65 | 2 - 4 | 175 | 15 | 10 | 1 | 65 | 166 | 52 | 0,1 |
| 66 | 2 - 4 | 175 | 15 | 20 | 1 | 65 | 175 | 55 | 2,3 |
| 67 | 2 - 4 | 175 | 15 | 30 | 1 | 65 | 192 | 60 | 6,4 |
| 68 | 2 - 4 | 175 | 15 | 35 | 1 | 65 | 200 | 63 | 8,6 |

Bezugzeichen

1 Granulat-Korn
2 Kante der Schnittfläche
3 Oberfläche
4 Poren
5 Lamellen
6 Haarrisse

**Ansprüche**

1. Verfahren zum Herstellen von vorwiegend offenporigen Schaumglas-Formkörpern, insbesondere Schaumglas-Granulat,
dadurch gekennzeichnet,
daß Schaumglas-Formkörper mit vorwiegend geschlossenen Poren einer Unterdruck- und/oder Überdruckbehandlung unterworfen werden.

2. Verfahren nach Anspruch 1,
dadurch gekennzeichnet,
daß als Medium für die Überdruckbehandlung Wasser oder eine wässrige Lösung verwendet wird.

3. Verfahren nach Anspruch 1,
dadurch gekennzeichnet,
daß als Medium für die Überdruckbehandlung ein Gas, vorzugsweise Luft verwendet wird.

4. Verfahren nach Anspruch 1 oder 2,
dadurch gekennzeichnet,
daß die Druckbehandlung bei Drücken von 1-50 bar während einer Zeit von 0,5 Minuten bis einige Stunden durchgeführt wird.

5. Verfahren nach Anspruch 1,
dadurch gekennzeichnet,
daß die Unterdruckbehandlung bei Drücken von 1-950 mbar während einer Zeit von 0,5 Minuten bis einige Stunden durchgeführt wird.

6. Verfahren nach Anspruch 1 in Verbindung mit einem der Ansprüche 2,3,4 oder 5,
dadurch gekennzeichnet,
daß das Ausgangsmaterial zunächst einer Unterdruckbehandlung und anschließend einer Überdruckbehandlung unterworfen wird.

7. Verfahren nach Anspruch 1,2,3 oder 4,
dadurch gekennzeichnet,
daß die Druckbehandlung mit einem Anfangsdruck von 2-50 bar durchgeführt und solange fortgeführt wird, bis der Druckabfall einen gewünschten, dem angestrebten Volumen der offenen Poren entsprechenden Wert aufweist.

8. Verfahren nach Anspruch 1,
dadurch gekennzeichnet,
daß die Druckbehandlung bei konstantem Druck durchgeführt und abgebrochen wird, wenn die zum Aufrechterhalten des Druckes erforderliche Nachfüllmenge des Druckmittels einen Wert erreicht hat, der dem gewünschten Volumen der offenen Poren entspricht.

9. Verfahren nach Anspruch 1,
dadurch gekennzeichnet,
daß als Einsatzstoff ein Schaumglasgranulat mit einer Rohdichte von 0,05 bis 0,4 g/cm$^3$ verwendet wird und die Druckbehandlung bis zu einem Volumen der offenen Poren von ca. 60-80 Vol% fortgesetzt wird.

FIG.1

FIG.2

FIG.3

FIG.4

EP 0 386 648 A1

FIG.5

FIG.6

FIG.7

Europäisches
Patentamt

**EUROPÄISCHER RECHERCHENBERICHT**

Nummer der Anmeldung

EP 90 10 4066

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 275 144 (KIRIN BEER K.K.) <br> * Patentansprüche 1,7-9 * <br> ----- | 1 | C 03 C 11/00 <br> C 03 B 19/10 |
| | | | **RECHERCHIERTE SACHGEBIETE (Int. Cl.5)** <br><br> C 03 C <br> C 03 B |

Der vorliegende Recherchenbericht wurde für alle Patentansprüche erstellt

| Recherchenort | Abschlußdatum der Recherche | Prüfer |
|---|---|---|
| DEN HAAG | 15-06-1990 | BOUTRUCHE J.P.E. |